**Europäisches Patentamt**

**European Patent Office**

**Office européen des brevets**

(11) Numéro de publication : **0 425 372 B1**

(12) # FASCICULE DE BREVET EUROPEEN

(45) Date de publication du fascicule du brevet :
**29.12.93 Bulletin 93/52**

(51) Int. Cl.⁵ : **A01G 7/04**

(21) Numéro de dépôt : **90402993.1**

(22) Date de dépôt : **24.10.90**

(54) **Procédés de vieillissement accéléré et de traitement des rhizomes d'iris.**

(30) Priorité : **26.10.89 FR 8914042**

(43) Date de publication de la demande :
**02.05.91 Bulletin 91/18**

(45) Mention de la délivrance du brevet :
**29.12.93 Bulletin 93/52**

(84) Etats contractants désignés :
**BE CH DE GB IT LI NL**

(56) Documents cités :
**FR-A- 75 570
FR-A- 1 185 258
GB-A- 1 212 118
US-A- 1 835 888
horticultural abs vol. 17, no. 2, 1985, lal,da-nu,seth: "induction in iris (iris kumaonensis) through gamma rays and the chemical muta-gen-ethyl methane sulphonate"**

(73) Titulaire : **COMMISSARIAT A L'ENERGIE
ATOMIQUE
31-33, rue de la Fédération
F-75015 Paris (FR)**
Titulaire : **UNIVERSITE DES SCIENCES ET
TECHNIQUES DU LANGUEDOC (Montpellier I)
Place Eugène Bataillon
F-34060 Montpellier (FR)**

(72) Inventeur : **Baccou, Jean Claude
82 rue Azalais d'Altier
F-34080 Montpellier (FR)**
Inventeur : **Bessiere, Jean Marie
170 rue des Chênes
F-34980 Saint Clément La Rivière (FR)**
Inventeur : **Boisseau, Patrick
11 Chemin Brunet
F-13090 Aix en Provence (FR)**
Inventeur : **Faugeras, Pierre
Villa 10, Montplaisir
F-30130 Pont Saint Esprit (FR)**
Inventeur : **Jouy, Nicolas
88 rue des Alouettes
F-34990 Juvignac (FR)**
Inventeur : **Peyrot, Elysabette
18 Route du Mont Cindre
F-69450 Saint Cyr au Mont d'Or (FR)**
Inventeur : **Sauvaire, Yves
246 Chemin de la Qualité
F-34980 Montpellier sur Lez (FR)**

(74) Mandataire : **Mongrédien, André et al
c/o BREVATOME 25, rue de Ponthieu
F-75008 Paris (FR)**

## Description

La présente invention a pour objet un procédé du vieillissement accéléré des rhizomes d'iris ou de toute autre plante renfermant des précurseurs d'irones et un procédé de traitement de ces rhizomes vieillis prématurément.

Au cours du vieillissement des rhizomes d'iris, les triterpénoïdes ou triterpènes contenus dans les rhizomes se transforment en irones (nom générique donné à deux cétones biéthyléniques $C_{14}H_{22}O$). La gamma-irone qui est le principe odorant de la racine d'iris est utilisé industriellement dans les secteurs de la parfumerie et des cosmétiques ou comme arôme dans le domaine agro-alimentaire.

Actuellement, après une période de culture des iris de 2 à 3 ans, les rhizomes sont stockés pendant une durée de 3 à 5 ans et c'est au cours de ce stockage que se produit la transformation des triterpénoïdes en irones.

Ce stockage des rhizomes d'iris pendant une longue durée présente un certain nombre d'inconvénients et tout d'abord une immobilisation, pendant plusieurs années, de matière première et donc de capitaux, ce qui peut être néfaste pour une bonne gestion financière de l'entreprise détentrice de cette matière première. En outre, cette immobilisation entraîne une augmentation du coût de la matière première, lorsque celle-ci est stockée chez les producteurs d'iris, ou du coût du procédé de traitement industriel, lorsque les rhizomes sont stockés chez les fabricants de parfums, de cosmétiques ou d'arômes alimentaires.

Par ailleurs, la mise sur le marché de rhizomes d'iris dont la durée de stockage a été insuffisante pour assurer une transformation optimale des triterpénoïdes en irones peut se traduire par des rendements médiocres lors du traitement industriel, augmentant encore le coût des produits finis.

Les inconvénients ci-dessus existent aussi pour toutes les plantes dont les rhizomes renferment des composés aptes à se transformer en irones.

La présente invention a justement pour objet un procédé de vieillissement accéléré des rhizomes d'iris ou de toute autre plante renfermant des précurseurs d'irones et un procédé de traitement de ces rhizomes permettant de remédier aux inconvénients ci-dessus en accélérant la transformation des précurseurs et en particulier des triterpénoïdes en irones, limitant ainsi l'immobilisation de capitaux ainsi que les coûts de traitement industriel des rhizomes pour en extraire les produits utilisables en parfumerie, dans les cosmétiques et les aliments.

De façon plus précise, l'invention a pour objet un procédé de vieillissement accéléré d'un rhizome d'iris ou de tout matériel végétal renfermant des précurseurs d'irones, consistant à irradier, après récolte, tout ou partie du rhizome ou du matériel avec un rayonnement ionisant en vue d'accélérer la transformation desdits précurseurs en irones.

Pour les iris, les précurseurs sont essentiellement des triterpénoïdes.

L'irradiation de graines ou de rhizomes de fleurs n'a été utilisée jusqu'à ce jour, que pour améliorer l'aspect des fleurs, la robustesse ou la croissance des plants, par mutation, comme décrit dans les documents Horticultural abs. vol. 17, n°2, 1985 "Induction of mutations in Iris (Iris Kumaonensis) through gamma rays and the chemical mutagen-ethyl methane sulphonate", GB-A-1 212 118 ou FR-A-1 185 258. Cette irradiation est effectuée avant ou après la mise en terre et à des faibles doses, non destructrices.

Selon l'invention, l'irradiation de tout ou partie des rhizomes d'iris par un rayonnement ionisant engendre des radicaux libres à partir des molécules d'eau présentes dans les rhizomes augmentant la vitesse d'oxydation des précurseurs et notamment des triterpénoïdes en irones.

De préférence, les rhizomes sont traités par le procédé de l'invention, dès leur récolte. En effet, les rhizomes frais contiennent une quantité importante d'eau qui sous l'irradiation va engendrer une quantité importante de radicaux libres destinés à l'oxydation des précurseurs tels que les triterpénoïdes. Toutefois, dans certains cas, il est possible d'irradier tout ou partie du rhizome d'iris après une période de stockage déterminée. En particulier, il est possible de traiter les rhizomes actuellement en stock chez les producteurs d'iris ou chez les industriels.

Cette irradiation permet en outre une transformation optimale des précurseurs et en particulier des triterpénoïdes en irones augmentant ainsi les rendements de fabrication des produits finis.

Selon l'invention, le procédé de vieillissement peut être appliqué au rhizome d'iris entier, à une partie de ces rhizomes, à des rhizomes broyés sous forme d'une poudre grossière ou encore aux précurseurs d'irones comme les triterpénoïdes extraits des rhizomes.

Selon l'invention, l'extraction des triterpénoïdes des rhizomes d'iris est réalisée à l'aide de solvants organiques.

Cette extraction se fait en particulier de la façon suivante : mise en contact d'une solution d'alcane et en particulier d'hexane avec les rhizomes d'iris puis ajout d'un volume égal d'une solution alcoolique miscible à la solution alcanique notamment une solution d'éthanol à 70%.

La solution obtenue est alors soumise directement à l'irradiation qui va couper les molécules d'eau de cette solution et former des radicaux libres qui vont servir à l'oxydation des triterpénoïdes.

Pour obtenir un effet positif intéressant, on utilise des doses d'irradiation allant de 0,5 à 100 kgrays. Une dose de 0,5 kgray conduit à une vitesse d'oxydation trop lente alors qu'une dose supérieure à 100 kgrays peut entraîner une détérioration partielle des molécules constituant les rhizomes, nuisible à la production d'irones.

De façon avantageuse, on utilise des débits de dose allant de 0,5 à 100 grays par minute. L'utilisation de faibles débits de dose permet d'allonger la durée de l'irradiation, ce qui est préférable pour une transformation maximale des précurseurs comme les triterpénoïdes en irones. Dans les essais, la durée d'irradiation varie de 20 minutes à 165 heures.

Selon l'invention, l'irradiation est réalisée avec des rayonnements ionisants, c'est-à-dire avec des rayonnements très énergétiques tels que les rayons gamma, X ou électrons accélérés. En particulier, l'irradiation est réalisée avec des rayonnements gamma ou des électrons accélérés.

Avantageusement, l'irradiation du matériel végétal est effectué après l'avoir mis dans un récipient étanche.

L'invention s'applique à tous les rhizomes d'iris connus et en particulier aux deux espèces employées le plus communément dans l'industrie, telles que l'Iris germanica L. et l'Iris pallida L.

L'invention a aussi pour objet un procédé de traitement d'un rhizome d'iris consistant à le soumettre au procédé de vieillissement décrit précédemment, à le laisser reposer pendant une durée variable en fonction des conditions d'irradiation puis à en extraire les irones ainsi obtenues. La période de repos à l'air libre des rhizomes est nécessaire pour assurer la transformation optimale des tripernéoïdes en irones. Cette période correspond à une période d'incubation.

En particulier, le procédé selon l'invention permet d'obtenir en deux mois une teneur en irones dans les rhizomes d'iris venant d'être récoltés comparable à celle des rhizomes stockés perdant trois ans minimum.

L'extraction des irones peut être réalisée de façon classique par hydrodistillation ou à l'aide de solvants organiques tels que les alcanes aliphatiques ou aromatiques et leurs dérivés chlorés. On peut par exemple utiliser l'hexane, le dichlorométhane, le benzène, etc.

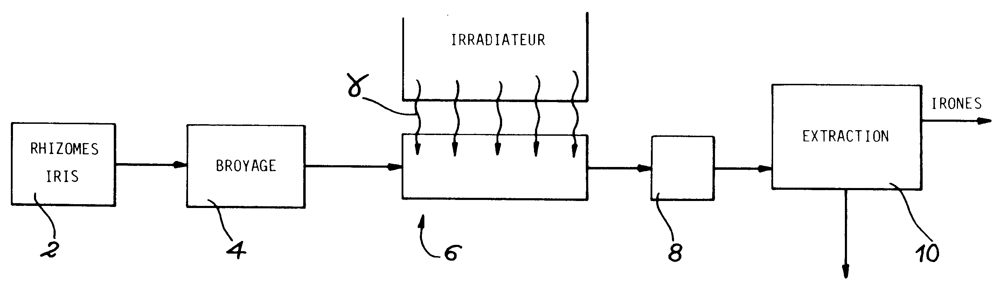

D'autres caractéristiques et avantages de l'invention ressortiront mieux de la description qui va suivre, donnée à titre illustratif et non limitatif, en référence à l'unique figure qui représente schématiquement les différentes étapes du procédé de traitement des rhizomes d'iris conformément à l'invention.

Juste après la récolte des rhizomes d'iris, représentée par le bloc 2 de la figure, on les soumet à un broyage de façon à former une poudre grossière de 1 mm de diamètre de grains environ. Cette étape de broyage est représentée par le bloc 4 de la figure. La poudre est ensuite soumise à une irradiation dont le débit de dose est de 3 à 100 grays/min et dont la dose est de 3 à 30 kgrays, à l'aide d'un rayonnement gamma émis par une source au Césium[137] ou toute autre source. Cette étape d'irradiation est représentée en 6 sur la figure annexée et assure la transformation des molécules d'eau de la poudre de rhizomes en radicaux libres.

La poudre irradiée est ensuite stockée pendant 1 à 2 mois à l'air libre pour permettre aux radicaux libres de réagir avec les triterpénoïdes et d'oxyder ces derniers en irones. Cette étape de repos est représentée en 8 sur la figure. La poudre est ensuite traitée de façon à en extraire les irones.

Cette étape d'extraction symbolisée par le bloc 10 sur la figure unique, consiste en une hydrodistillation, bien connue de l'homme de l'art.

Les irones ainsi extraites sont utilisables directement dans les parfums, les cosmétiques comme produit odorant et dans les aliments comme arôme.

Ce procédé de traitement a été appliqué sur des Iris germanica L. et sur des Iris pallida L.

Parallèlement au procédé selon l'invention, on a stocké à l'air libre pendant trois ans des rhizomes d'iris broyés.

La détermination de la teneur en irones dans la poudre traitée selon l'invention et dans celle traitée selon l'art antérieur a été réalisée par dosage par chromatographie en phase gazeuse. Les résultats obtenus sont regroupés dans le tableau suivant. La teneur en irones y est donnée en gramme par gramme de poudre sèche.

## T A B L E A U

### TENEUR EN IRONES DE RHIZOMES D'IRIS

| Irradiation | 0 | 0 | 3 kgr |
|---|---|---|---|
| | Teneur au départ T=0 | traitement 1 T=2 mois | traitement 2 T=2 mois |
| IRIS GERMANICA L. | $0,81 \times 10^{-4}$ | $1,01 \times 10^{-4}$ | $1,57 \times 10^{-4}$ |
| IRIS PALLIDA L. | $0,387 \times 10^{-4}$ | $2,7 \times 10^{-4}$ | $3,62 \times 10^{-4}$ |

Le traitement 1 correspond aux poudres stockées à l'air libre et le traitement 2 aux poudres irradiées à 3 kgrays puis stockées à l'air libre pendant deux mois, selon l'invention.

Il ressort clairement de ce tableau que la poudre de rhizome d'iris irradiée selon l'invention contient, au bout de 2 mois de stockage, une teneur en irones plus élevée que cette même poudre non irradiée.

Les dosages réalisés à partir d'Iris pallida L. stockés pendant 4 ans et non irradiés ont par ailleurs donné une teneur en irones de $3,67 \times 10^{-4}$ gramme par gramme de poudre sèche, ce qui est très proche de la valeur obtenue avec une irradiation gamma.

En outre, on a constaté que les rhizomes stockés à l'air libre pendant plusieurs années étaient partiellement attaqués par des champignons, alors que les rhizomes traités selon l'invention étaient exempts de cette attaque cryptogamique.

Par ailleurs, on a traité selon l'invention de la poudre de rhizomes d'Iris pallida L. stockés depuis plusieurs années chez les industriels. Cette poudre contenait avant traitement selon l'invention $3,27 \times 10^{-4}$ g d'irones par gramme de poudre sèche. Après traitement, cette même poudre contenait $7,13 \times 10^{-4}$ g d'irones par gramme de poudre sèche, ce qui correspond à un doublement de la teneur en irones. Toutefois, cette valeur n'est pas considérée comme une teneur optimale.

De façon avantageuse, on effectue l'irradiation après avoir placé le matériel végétal à irradier dans des sacs ou récipients étanches et on stocke le matériel irradié dans ces sacs jusqu'à ce qu'on en extrait les irones. Dans ces conditions, il est possible d'obtenir un gain de 20% en irones.

## Revendications

1. Procédé de vieillissement accéléré d'un rhizome d'iris ou de tout matériel végétal renfermant des précurseurs d'irones, consistant à irradier (6), après récolte, tout ou partie du rhizome ou du matériau avec un rayonnement ionisant en vue d'accélérer la transformation desdits précurseurs du rhizome ou matériel en irones.

2. Procédé selon la revendication 1, caractérisé en ce que lesdits précurseurs sont des triterpénoïdes.

3. Procédé selon la revendication 1 ou 2, caractérisé en ce que l'on traite (4) le rhizome pour en obtenir une poudre que l'on soumet audit rayonnement.

4. Procédé selon la revendication 1 ou 2, caractérisé en ce que l'on extrait lesdits précurseurs du rhizome et qu'on les soumet audit rayonnement.

5. Procédé selon l'une quelconque des revendications 1 à 4, caractérisé en ce que le débit de dose est choisi de 0,5 à 100 grays par minute.

6. Procédé selon l'une quelconque des revendications 1 à 5, caractérisé en ce que la dose d'irradiation est choisi de 0,5 à 100 kgrays.

7. Procédé selon l'une quelconque des revendications 1 à 6, caractérisé en ce que le rayonnement ionisant est un rayonnement gamma ou d'électrons accélérés.

8. Procédé selon l'une quelconque des revendications 1 à 7, caractérisé en ce que l'irradiation est effectuée dès la récolte (2) du rhizome.

9. Procédé selon l'une quelconque des revendications 1 à 8, caractérisé en ce que le rhizome est le rhizome d'Iris germanica L. ou le rhizome d'Iris pallida L.

10. Procédé selon l'une quelconque des revendications 1 à 7 ou 9, caractérisé en ce qu'on traite des rhizomes ou des poudres d'iris stockés depuis un certain nombre de mois ou d'années.

11. Procédé de traitement d'un rhizome d'iris consistant à le soumettre au procédé selon l'une quelconque des revendications 1 à 10, à le laisser reposer (8) pendant 15 à 60 jours, puis à extraire (10) les irones ainsi obtenues.

12. Procédé selon l'une quelconque des revendications 1 à 11, caractérisé en ce que l'irradiation est effectuée après avoir placé la partie du rhizome ou du matériel végétal à irradier dans un récipient étanche.

13. Procédé de traitement d'un rhizome d'iris ou de tout matériel végétal renfermant des précurseurs d'irones, consistant à le soumettre au procédé selon l'une quelconque des revendications 1 à 11 en réalisant l'irradiation de la partie du rhizome ou du matériel végétal dans un récipient étanche et à stocker ladite partie irradiée dans le récipient jusqu'à l'extraction des irones ainsi obtenues.


**Patentansprüche**

1. Verfahren zum beschleunigten Altern eines Iriswurzelstocks oder jedes pflanzlichen Materials, das Ironzwischenstoffe einschließt, das darin besteht, nach der Ernte den Wurzelstock oder das Material ganz oder teilweise mit einer ionisierenden Strahlung zu bestrahlen (6), hinsichtlich einer Beschleunigung der Umwandlung der genannten Zwischenstoffe des Wurzelstocks oder Materials in Irone.

2. Verfahren nach Anspruch 1, dadurch gekennzeichnet, daß die genannten Zwischenstoffe Triterpenoide sind.

3. Verfahren nach Anspruch 1 oder 2, dadurch gekennzeichnet, daß man den Wurzelstock (4) behandelt, um ein Pulver zu erhalten, das man der Strahlung aussetzt.

4. Verfahren nach Anspruch 1 oder 2, dadurch gekennzeichnet, daß man die genannten Zwischenstoffe dem Wurzelstock entzieht, und daß man sie der genannten Strahlung aussetzt.

5. Verfahren nach einem der Ansprüche 1 bis 4, dadurch gekennzeichnet, daß die Strahlungsleistung gewählt wird von 0,5 bis 100 Grays pro Minute.

6. Verfahren nach einem der Ansprüche 1 bis 5, dadurch gekennzeichnet, daß die Strahlungsdosis gewählt wird zwischen 0,5 und 100 Kilograys.

7. Verfahren nach einem der Ansprüche 1 bis 6, dadurch gekennzeichnet, daß die ionisierende Bestrahlung eine Bestrahlung des Typs Gamma oder mit beschleunigten Elektronen ist.

8. Verfahren nach einem der Ansprüche 1 bis 7, dadurch gekennzeichnet, daß die Bestrahlung durchgeführt wird ab der Ernte (2) des Wurzelstocks.

9. Verfahren nach einem der Ansprüche 1 bis 8, dadurch gekennzeichnet, daß der Wurzelstock der Wurzelstock von der Iris germanica L. ist, oder der Wurzelstock der Iris pallida L.

10. Verfahren nach einem der Ansprüche 1 bis 7 oder 9, dadurch gekennzeichnet, daß man Wurzelstöcke behandelt oder Irispulver, gelagert seit einer gewissen Anzahl von Monaten oder Jahren.

11. Verfahren zur Behandlung eines Iriswurzelstocks, das darin besteht, ihn dem Verfahren gemäß einem der Ansprüche 1 bis 10 zu unterziehen, ihn während 15 bis 60 Tagen ruhen zu lassen (8), dann die so erlangten Irone zu extrahieren (10).

12. Verfahren nach einem der Ansprüche 1 bis 11, dadurch gekennzeichnet, daß die Bestrahlung durchgeführt wird, nachdem man den zu bestrahlenden Teil des Wurzelstocks oder des pflanzlichen Materials in einem dichten Behälter untergebracht hat.

13. Verfahren zur Behandlung eines Iriswurzelstocks oder jedes pflanzlichen Materials, das Ironzwischenstoffe einschließt, das darin besteht, das Verfahren gemäß irgendeinem der Ansprüche 1 bis 11 anzuwenden, indem man die Bestrahlung des Teils des Wurzelstocks oder des pflanzlichen Materials in einem dichten Behälter durchführt, und indem man den genannten bestrahlten Teil in dem Behälter lagert bis zur Extrahierung der so erlangten Irone.

## Claims

1. Process for the accelerated ageing of an iris rhizome or any other plant material containing precursors of irones consisting of irradiating (6), after harvesting, all or part of the rhizome or material with ionizing radiation with a view to accelerating the transformation of said rhizome or material precursors into irones.

2. Process according to claim 1, characterized in that said precursors are triterpenoids.

3. Process according to claim 1 or 2, characterized in that the rhizome is treated (4) in order to obtain a powder, which then undergoes said radiation.

4. Process according to claim 1 or 2, characterized in that said precursors are extracted from the rhizane and are subject to said radiation.

5. Process according to any one of the claims 1 to 4, characterized in that the dosage rate is 0.5 to 100 grays/minute.

6. Process according to any one of the claims 1 to 5, characterized in that the irradiation dose is 0.5 to 100 kgrays.

7. Process according to any one of the claims 1 to 6, characterized in that the ionizing radiation consists of accelerated electron or gamma radiation.

8. Process according to any one of the claims 1 to 7, characterized in that irradiation is performed as soon as the rhizane is harvested (2).

9. Process according to any one of the claims 1 to 8, characterized in that the rhizome is the Iris germanica L. or Irish pallida L. rhizome.

10. Process according to any one of the claims 1 to 7 or 9, characterized in that rhizomes or iris powders stored for a certain number of months or years are treated.

11. Process for the treatment of an iris rhizome consisting of subjecting it to the process according to any one of the claims 1 to 10, leaving it (8) for 15 to 60 days and then extracting (10) the thus obtained irones.

12. Process according to any one of the claims 1 to 11, characterized in that the irradiation is effected after having put said rhizome or plant material part to be irradiated in a tight container.

13. Process for the treatment of an iris rhizcme or any plant material containing precursors of irones, consisting of subjecting it to the process according to any one of the claims 1 to 11 by effecting the irradiation of the rhizome or plant material part in a tight container and storing said irradiated part in said container until the extracting of the thus obtained irones.

RHIZOMES IRIS — BROYAGE — IRRADIATEUR — EXTRACTION — IRONES

2   4   6   8   10

EP 0 425 372 B1